(19) Europäisches Patentamt
European Patent Office
Office européen des brevets

(11) **EP 2 306 588 B1**

(12) **EUROPEAN PATENT SPECIFICATION**

(45) Date of publication and mention
of the grant of the patent:
**17.10.2012 Bulletin 2012/42**

(51) Int Cl.:
*H01Q 7/00* *(2006.01)*      *G06K 19/07* *(2006.01)*
*G06K 19/077* *(2006.01)*   *H01Q 1/38* *(2006.01)*
*H01Q 1/22* *(2006.01)*

(21) Application number: **08777633.2**

(22) Date of filing: **26.06.2008**

(86) International application number:
**PCT/JP2008/061668**

(87) International publication number:
**WO 2009/157081 (30.12.2009 Gazette 2009/53)**

(54) **RFID TAG**

RFID-ETIKETT

ÉTIQUETTE RFID

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**06.04.2011 Bulletin 2011/14**

(73) Proprietors:
• **Fujitsu Limited
Kawasaki-shi, Kanagawa 211-8588 (JP)**
• **Fujitsu Frontech Limited
Inagi-shi
Tokyo 206-8555 (JP)**

(72) Inventors:
• **BABA, Shunji
Kawasaki-shi
Kanagawa 211-8588 (JP)**
• **OZAKI, Noritsugu
Kawasaki-shi
Kanagawa 211-8588 (JP)**
• **MANIWA, Toru
Kawasaki-shi
Kanagawa 211-8588 (JP)**

• **KAI, Manabu
Kawasaki-shi
Kanagawa 211-8588 (JP)**
• **SUGIMURA, Yoshiyasu
Inagi-shi
Tokyo 206-8555 (JP)**
• **NOGAMI, Satoru
Inagi-shi
Tokyo 206-8555 (JP)**

(74) Representative: **Kreutzer, Ulrich et al
Cabinet Beau de Loménie
Lessingstrasse 6
80336 München (DE)**

(56) References cited:
**EP-A1- 1 835 564      EP-A2- 1 538 558
EP-A2- 1 626 364      JP-A- 8 180 160
JP-A- 9 129 495        JP-A- 2000 067 197
JP-A- 2003 249 814   JP-A- 2003 249 814
JP-A- 2004 242 245   JP-A- 2005 165 703
JP-A- 2005 284 352   JP-A- 2007 103 881
JP-A- 2007 310 898   JP-T- 2004 504 712**

**Description**

Technical Field

The present invention relates to an RFID (Radio_Frequency_IDentification) tag.

Background Art

Conventionally, there are known various kinds of RFID tag which exchange information with external devices represented by a reader/writer in a non-contact manner by radio waves. As a kind of this RFID tag, there has been proposed one having such a structure that a conductor pattern and an IC chip for radio wave communication are mounted on a dielectric member in sheet form. The RFID tag generally has a dielectric member, an IC chip provided on one of the top surface and the undersurface of this dielectric member, and an antenna having a conductor pattern arranged on the dielectric member (for example, see Patent Citation 1).

Also, there is known an RFID tag that includes a loop antenna extending like a belt over a top surface and a undersurface of a dielectric member and having both ends connected to an IC chip (for example, see Patent Citation 2). The RFID tag having the loop antenna extending like a belt over the top surface and the undersurface of the dielectric member can improve the gain of the antenna, thereby expanding a communications distance, while suppressing the area of the entire RFID tag.

There is a case in which a capacitor is added to the RFID tag so that the frequency response of the loop antenna matches with a communication frequency of the RFID tag.

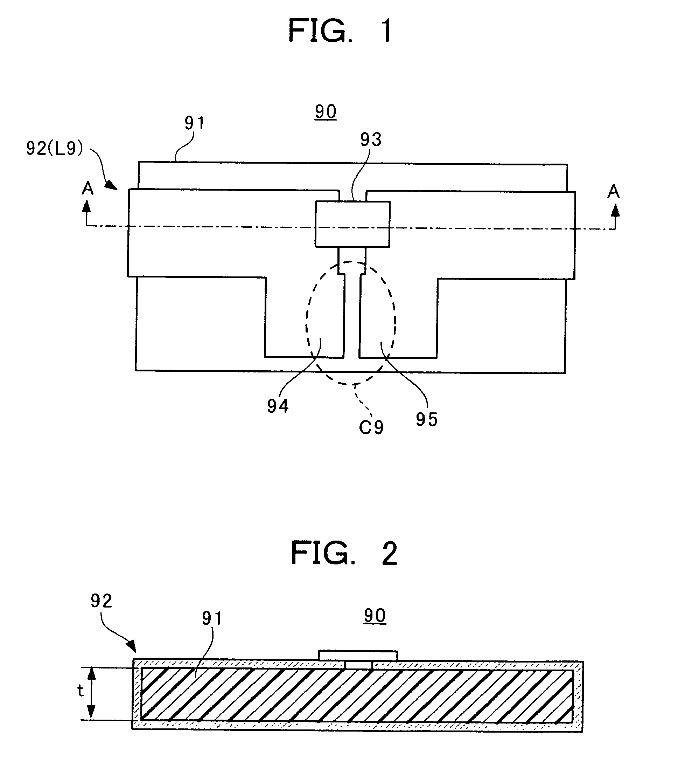

FIG. 1 is a plan view of a conventional RFID tag when viewed from an IC chip side, and FIG. 2 is a cross-sectional view of the RFID tag illustrated in FIG. 1 taken along a line A-A.

An RFID tag 90 illustrated in FIG. 1 and FIG. 2 includes a printed board 91 made of a dielectric material, an IC chip 93, and an antenna pattern 92. The antenna pattern 92 extends over the top surface and the undersurface of the printed board, thereby forming a loop antenna L9. Both ends of the loop antenna L9 are connected to the IC chip 93. From the both ends of the antenna pattern 92 which are connected to the IC chip 93, electrode sections 94 and 95 mutually extend in the same direction, respectively. The opposed parts of the electrode sections are adjacent to each other, and a capacitor C9 is formed. The loop antenna L9 that can be considered as an inductor electrically and the capacitor C9 are connected in parallel, and a resonance frequency that affects a communication property is obtained by the inductance of the loop antenna L9 and the capacitance of the capacitor C9.

    Patent Citation 1: Japanese Laid-open Patent Publication No. 2002-246829

Patent Citation 2: EP 1 626 364 A2

According to JP 2003249814, in an RFID tag a loop antenna has a tuning capacitor for the antenna, the tuning capacitor is formed in patterns on the rear surface of an insulated substrate and tuned at communication frequencies, both terminals of the capacitor and the loop antenna are made to mutually float electrically; a capacitor is formed equivalently by one end of a loop coil and a rear surface electrode, and a capacitor is formed equivalently by the other end of the coil and the electrode.

Disclosure of Invention

Generally, in the thickness of the printed board of a RFID tag, a deviation occurs in each of individual products in a production phase. This also applies to the RFID tag 90 illustrated in FIG. 1 and FIG. 2. A deviation that occurs in a thickness t of the printed board 91 affects the area of the loop antenna L9. As a result, a deviation occurs in the inductance of the loop antenna L9, and the resonance frequency deviates from a designed value. For example, in the RFID tag illustrated in FIG. 1 and FIG. 2, when the inductance of the loop antenna is assumed to be L and the capacitance of the capacitor is assumed to be C, the resonance frequency f is expressed by the following equation (1).

$$f = 1/(2\pi(LC)^{0.5}) \quad \dots \quad (1)$$

As indicated by this equation (1), the resonance frequency f changes according to the inductance L.

Here, for example, there is known a trimming technique of correcting the produced deviation of the resonance frequency, by removing a part of the conductor pattern that forms the capacitor and thereby adjusting the capacitance of the capacitor (for example, Patent Citation 1). However, it takes enormous efforts to perform the trimming for the individual RFID tags, which lowers productivity in the mass production.

In view of the foregoing circumstances, plural embodiments described in the present description provide an RFID tag in which a deviation of a frequency response is suppressed without adjustment by removal or extension of a conductor pattern.

According to an aspect of the invention, a RFID tag includes:

    a tabular dielectric member;
a antenna pattern that extends over a top surface and an undersurface of the dielectric member and forms a loop antenna having both ends existing on one surface of the top surface and the undersurface;
a circuit chip that is electrically connected to the antenna pattern and performs communication via the loop antenna;

a first electrode that is connected directly or via a conductor to one of the both ends of the loop antenna and spreads on the one surface; and

a second electrode that is connected via a conductor to the other with respect to the one of the both ends of the loop antenna and spreads on the other surface with respect to the one surface of the top surface and the undersurface, along the first electrode.

According to this basic mode, the inductance of the loop antenna increases with increase in the thickness of the dielectric member, but a capacitance is formed between the first electrode and the second electrode provided via the dielectric member, and the capacitance of this capacitance also increases with the increase in the thickness of the dielectric member. Thus, a deviation of a resonance frequency due to a deviation of the inductance resulting from the thickness of the dielectric member acts in a direction suppressing a deviation of the capacitance. Therefore, the deviation of the frequency response is suppressed without adjustment by removal or extension of the conductor pattern.

Brief Description of Drawings

FIG. 1 is a plan view of a conventional RFID tag when viewed from an IC chip side.

FIG. 2 is a cross-sectional view of the RFID tag illustrated in FIG. 1 taken along a line A-A.

FIG. 3 is a plan view of an RFID tag according to a specific first embodiment when viewed from a IC chip side.

FIG. 4 is a cross-sectional view of the RFID tag illustrated in FIG. 3 taken along a line B-B.

Fig. 5 is a plan view of an RFID tag according to a specific second embodiment when viewed from an IC chip side.

FIG. 6 is a cross-sectional view of the RFID tag illustrated in FIG. 5 taken along a line C-C.

FIG. 7 is a cross-sectional view of an RFID tag according to a specific third embodiment.

Best Mode for Carrying Out the Invention

Specific embodiments of the RFID tag described for the basic mode will be described below with reference to the drawings.

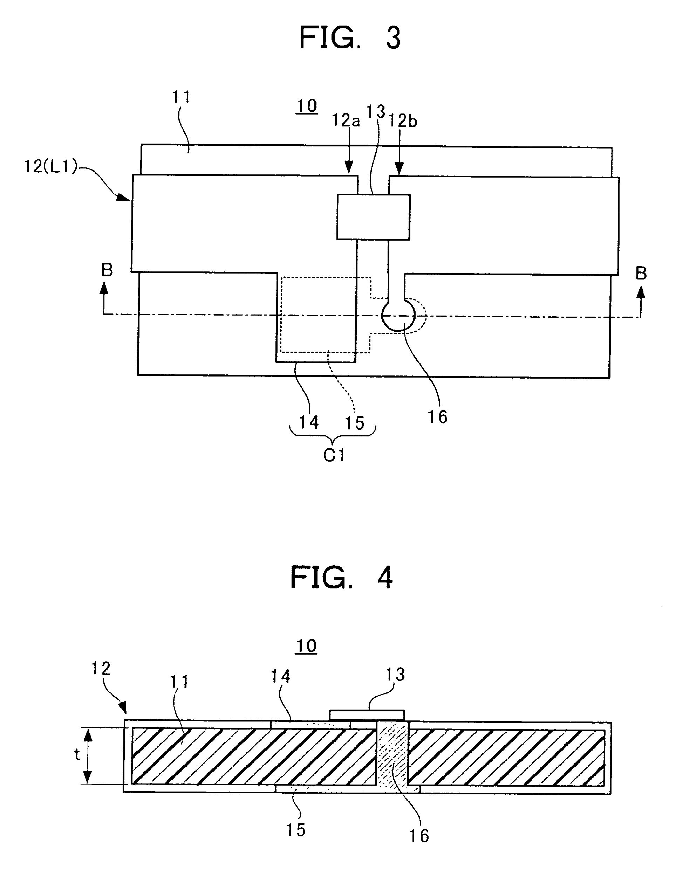

FIG. 3 is a plan view of an RFID tag according to a specific first embodiment when viewed from a IC chip side, and FIG. 4 is a cross-sectional view of the RFID tag illustrated in FIG. 3 taken along a line B-B.

An RFID tag 10 illustrated in FIG. 3 includes a tabular dielectric member 11, an antenna pattern 12, an IC chip 13 connected to the antenna pattern 12, a first electrode 14 and a second electrode 15 spreading on the top surface and the undersurface, respectively, of the tabular dielectric member 11.

The RFID tag 10 is an electronic device that exchanges information with a not-illustrated reader/writer in a non-contact manner, and receives energy of an electromagnetic field given by the reader/writer as electric energy, and the IC chip 13 is driven by the electric energy. The antenna pattern 12 functions as an antenna for communication, and the IC chip 13 performs radio communication through the antenna pattern 12. Here, the IC chip 13 is equivalent to an example of the circuit chip in the above-described basic mode.

Incidentally, among persons skilled in the art in the technical field of the present application, there is a case in which the "RFID tag" used in the description of the present application is called a "RFID tag inlay", by regarding the "RFID tag" as an internal member (inlay) for the "RFID tag". Alternatively, there is a case in which this "RFID tag" is called a "wireless IC tag". Further, a non-contact IC card also is included in this "RFID tag".

Subsequently, each part of the RFID tag 10 will be described.

The dielectric member 11 is formed by a dielectric material. The dielectric material is, for example, a resin, and is a synthetic resin represented by polyethylene terephthalate (PET) and epoxy based resin.

The antenna pattern 12, the first electrode 14 and the second electrode 15 are formed as a conductor pattern formed on the surface of the dielectric member 11. The antenna pattern 12 extends like a belt over the top surface and the undersurface of the dielectric member 11 and forms a loop antenna L1. Here, of the top surface and the undersurface of the dielectric member 11, one surface where both ends 12a and 12b of the loop antenna L1 are provided is referred to as the top surface, and the other surface is referred to as the undersurface.

The IC chip 13 is disposed on the top surface of the dielectric member 11, and is connected to the both ends 12a and 12b of the loop antenna L1 by solder or the like, thereby being electrically connected to the loop antenna L1. The IC chip 13 wirelessly communicates with the reader/writer not illustrated, through the loop antenna L1.

The first electrode 14 spreads like a plane on the top surface of the dielectric member 11, and is connected to the one end 12a of the loop antenna L1 directly. To be more specific, the first electrode 14 continuously extends from the antenna pattern 12, and is disposed to protrude in a direction crossing a direction in which the antenna pattern 12 extends.

The second electrode 15 spreads on the undersurface of the dielectric member 11 along the first electrode 14, and is connected, via a conductor, to the other end 12b, with respect to the one end 12a to which the first electrode 14 is connected, of the both ends 12a and 12b of the loop antenna L1. To be more specific, the second electrode 15 is connected to the other end 12b via a penetrating conductor 16 formed to penetrate the dielectric member 11. The end 12b of the loop antenna L1 disposed on the top surface of the dielectric member 11 and the second electrode 15 disposed on the undersurface of the dielectric member 11 are connected to each other over a short distance via the penetrating conductor 16. Therefore, as compared to a case in which a conductor goes by way of an edge of the dielectric member 11, parasitic resistance and parasitic inductance decrease.

The first electrode 14 and the second electrode 15 are disposed to face each other, between which the dielectric member 11 is interposed, and a capacitor C1 is formed by the first electrode 14 and the second electrode 15. The capacitor C1 and the loop antenna L1 are connected in parallel with respect to the IC chip 13. The frequency response of the loop antenna L1 is determined according to the characteristics of the loop antenna L1 and the capacitor C1. When the inductance of the loop antenna L1 is assumed to be L and the capacitance of the capacitor C1 is assumed to be C, a resonance frequency f is expressed by the following equation (2).

$$f = 1/(2\pi(LC)^{0.5}) \quad \dots \quad (2)$$

Here, when a dielectric constant of the dielectric member 11 is assumed to be $\varepsilon r$, each of the area of the first electrode 14 and the second electrode 15 is assumed to be S, and the distance between the first electrode 14 and the second electrode 15, namely the thickness of the dielectric member 11, is assumed to be t, the capacitance C of the capacitor C1 is expressed by the following equation (3).

$$C = \varepsilon r \times S/t \quad \dots \quad (3)$$

As indicated by the above equation (3), when the thickness t of the dielectric member 11 increases, the capacitance C decreases.

When the RFID tag 10 is produced, a deviation occurs in the thickness t of the dielectric member 11 in each of the individual products. When the thickness t of the dielectric member 11, for example, increases, the loop length of the loop antenna L1 becomes long, and the inductance L increases. However, when the thickness t of the dielectric member 11 increases, the capacitance C of the capacitor C1 decreases, as indicated by the above equation (3). In other words, when the thickness t of the dielectric member 11 increases, the inductance L increases, and the capacitance C decreases. As a result, a change in the resonance frequency f caused by the increase in the inductance L is suppressed by the decrease in the capacitance C. Thus, the deviation of the resonance frequency f resulting from the deviation occurring in the thickness t of the dielectric member 11 is suppressed.

Next, a specific second embodiment of the RFID tag will be described. In the following description of the second embodiment, the same elements as those of the embodiment described so far are provided with the same reference characters, and a feature different from the above-described embodiment will be described.

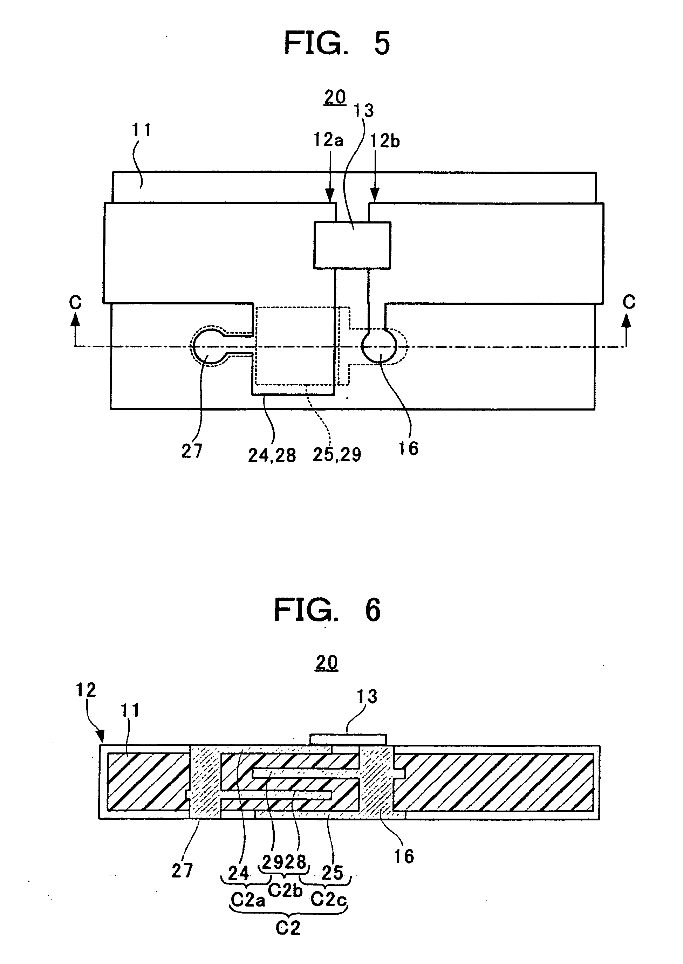

Fig. 5 is a plan view of an RFID tag according to the specific second embodiment when viewed from an IC chip side, and FIG. 6 is a cross-sectional view of the RFID tag illustrated in FIG. 5 taken along a line C-C.

An RFID tag 20 illustrated in FIG. 5 and FIG. 6 includes, in addition to a first electrode 24 spreading on the top surface of the dielectric member 11 and a second electrode 25 spreading on the undersurface, a third electrode 28 and a fourth electrode 29 provided inside the dielectric member 11.

The third electrode 28 spreads between the first electrode 24 and the second electrode 25, and is connected to the one end 12a of the loop antenna L1 through a conductor 27. Further, the fourth electrode 29 spreads between the first electrode 24 and the third electrode 28, and is connected to the other end 12b of the loop antenna L1 through the conductor 16. The conductor 27 that connects the one end 12a of the loop antenna L1 to the third electrode 28 is a penetrating conductor that penetrates the dielectric member 11. The conductor 16 that connects the other end 12b of the loop antenna L1 to the second electrode 25 and the third electrode 28 also is a penetrating conductor that penetrates the dielectric member 11. A capacitor C2 is formed by these first electrode 24, second electrode 25, third electrode 28 and fourth electrode 29. To be more specific, a first capacitor C2a is formed by the first electrode 24 and the fourth electrode 29 next to the first electrode 24, a second capacitor C2b is formed by the fourth electrode 29 and the third electrode 28 next to the fourth electrode 29, and a third capacitor C2c is formed by the third electrode 28 and the second electrode 25 next to the third electrode 28. The capacitor C2 is formed by a composite of the first capacitor C2a, the second capacitor C2b, and the third capacitor C2c.

By disposing the third electrode 28 and the fourth electrode 29 inside the dielectric member 11, a large-capacitance capacitor can be formed by increasing the capacitance of the capacitor, even when the thickness of the dielectric member 11 is large. Incidentally, the RFID tag 20 can be produced by, for example, a production method similar to that of a well-known multilayer wiring board.

When the RFID tag 20 is produced, there are two cases, namely, a case in which the deviation occurring in the thickness of the dielectric member 11 affects any of a distance between the first electrode 24 and the fourth electrode 29, a distance between the fourth electrode 29 and the third electrode 28, and a distance between the third electrode 28 and the second electrode 25, and a case in which the deviation occurring in the thickness of the dielectric member 11 affects these three distances almost equally. However, in either case, when, for example, the thickness of the dielectric member 11 increases, the capacitance of the capacitor C2 formed by the composition of the first capacitor C2a, the second capacitor C2b and the third capacitor C2c decreases. As a result, even when there is a change in the thickness t of the dielectric member 11, a change in the resonance frequency f caused by an increase of the inductance L in the loop antenna L1 is suppressed by a decrease of the capacitance C in the capacitor C2. Therefore, the deviation of the resonance frequency f due to the deviation occurring in the thickness of the dielectric member 11 is suppressed.

In the specific embodiment described above, a structure in which two electrodes are disposed inside the dielectric member has been described, but next, there will be described a third embodiment in which the number of electrodes provided inside the dielectric member is increased.

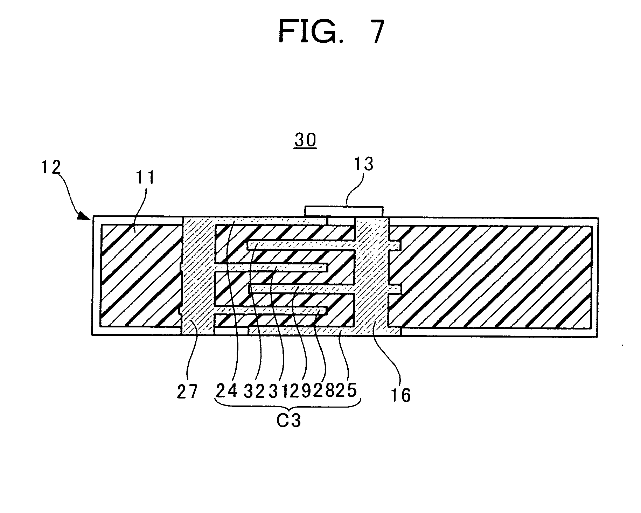

FIG. 7 is a cross-sectional view of an RFID tag according to the specific third embodiment. A structure appearing in a plan view of a RFID tag 30 of the third embodiment is the same as that of the RFID tag 20 of the second embodiment illustrated in FIG. 5 and thus, the plan view of the RFID tag 30 is omitted. Further, in the following description of the third embodiment, the same elements as those of the above-described embodiments are provided with the same reference characters, and a feature different from the above-described embodiments will be described.

The RFID tag 30 illustrated in FIG. 7 is different from the RFID tag 20 described with reference to FIG. 6 in that the RFID tag 30 further includes, inside the dielectric member 11, a fifth electrode 31 spreading between the fourth electrode 29 and the first electrode 24 and a sixth electrode 32 spreading between the fifth electrode 31 and the first electrode 24. The fifth electrode 31 is connected, together with the first electrode 24 and the third electrode 28, to the one end 12a of the loop antenna L1. The sixth electrode 32 is connected, together with the fourth electrode 29 and the second electrode 25, to the other end 12b of the loop antenna L1. A capacitor C3 is formed by the first electrode 24, the sixth electrode 32, the fifth electrode 31, the fourth electrode 29, the third electrode 28, and the second electrode 25. The RFID tag 30 can form the capacitor C3 of a larger capacitance and readily supports a wide range of resonance frequencies.

In the RFID tag 30 illustrated in FIG. 7, like the RFID tag 10 of the first embodiment and the RFID tag 20 of the second embodiment described above, the inductance of the loop antenna L1 and the capacitance of the capacitor C3 are tied to the thickness of the dielectric member 11. For example, when the thickness of the dielectric member 11 increases, the capacitance of the capacitor C3 decreases, while the inductance of the loop antenna L1 increases, on a principle similar to that of the RFID tag 20 of the second embodiment illustrated in FIG. 6. Therefore, according to the RFID tag 30, when there is a change in the thickness of the dielectric member 11, a change of the resonance frequency f caused by an increase of the inductance L in the loop antenna L1 (cf. FIG. 5) is suppressed by a decrease of the capacitance C in the capacitor C3. Thus, a deviation of the resonance frequency f resulting from a deviation occurring in the thickness of the dielectric member 11 is suppressed.

Incidentally, in the above description of each of the specific embodiments, the antenna pattern extending like a belt is taken as an example of the antenna pattern in the basic mode described in "Disclosure of Invention", but this antenna pattern may be linear, other than being shaped like a belt.

Further, in the above description of each of the specific embodiments, the first electrode 14 directly connected to one of the both ends of the loop antenna has been taken as an example of the first electrode in the basic mode described in "Disclosure of Invention", but this first electrode may be connected to the loop antenna via a conductor pattern.

Furthermore, in the above description of each of the specific embodiments, the one connected via the penetrating conductor is taken as an example of the second electrode, but this second electrode may be, for example, one connected via a conductor pattern extending along an edge of the dielectric member, other than a penetrating conductor section.

## Claims

1.  An RFID tag (10) comprising:

    - a tabular dielectric member (11);
    - an antenna pattern (12) that extends over a top surface and an undersurface of the dielectric member and forms a loop antenna having both ends (12a, 12b) existing on one surface of the top surface and the undersurface;
    - a circuit chip (13) that is electrically connected to the antenna pattern (12) and performs communication via the loop antenna; **characterized in that** it further comprises:
    - a first electrode (14, 24) that is connected directly or via a conductor to one (12a, 12b) of the both ends of the loop antenna and spreads on the one surface; and
    - a second electrode (15, 25) that is connected via a conductor to the other (12a, 12b) with respect to the one (12a) of the both ends of the loop antenna and spreads on the other surface with respect to the one surface of the top surface and the undersurface, along the first electrode (14, 24).

**2.** The RFID tag (10) according to claim 1, wherein the second electrode (15, 25) is connected to the loop antenna via a penetrating conductor (16) penetrating the dielectric member (11).

**3.** The RFID tag (10) according to claim 1 or 2, further comprising:

- a third electrode(28) that spreads, inside the dielectric member, between the first electrode (14, 24) and the second electrode(15, 25), and is connected to the one of the both ends (12a, 12b) of the loop antenna via a conductor; and
- a fourth electrode(29) that spreads, inside the dielectric member (11), between the first electrode(14, 24) and the third electrode(28), and is connected to the other of the both ends (12a, 12b) of the loop antenna via a conductor.

**Patentansprüche**

**1.** RFID-Etikett (10) umfassend:

- ein flaches dielektrisches Element (11),
- ein Antennenmuster (12), das sich über eine obere Oberfläche und eine untere Oberfläche des dielektrischen Elementes erstreckt und eine Schleifenantenne bildet, deren beiden Enden (12a, 12b) auf einer Oberfläche von der oberen Oberfläche und der unteren Oberfläche liegen,
- ein Schaltkreischip (13), der elektrisch mit dem Antennenmuster (12) verbunden ist und mittels der Schleifenantenne Kommunikation durchführt,
**dadurch gekennzeichnet, daß** es ferner umfaßt:
- eine erste Elektrode (14, 24), die direkt oder mittels eines Leiters mit einem (12a, 12b) der beiden Enden der Schleifenantenne verbunden ist und sich auf der einen Oberfläche ausbreitet, und
- eine zweite Elektrode (15, 25), die mittels eines Leiters mit dem anderen (12a, 12b), in bezug auf das eine (12a) der beiden Enden der Schleifenantenne verbunden ist und sich auf der anderen Oberfläche in bezug auf die eine Oberfläche von der oberen Oberfläche und der unteren Oberfläche entlang der ersten Elektrode (14, 24) ausbreitet.

**2.** RFID-Etikett (10) nach Anspruch 1, wobei die zweite Elektrode (15, 25) mit der Schleifenantenne mittels eines durchdringenden Leiters (16) verbunden ist, der das dielektrische Element (11) durchdringt.

**3.** RFID-Etikett (10) nach Anspruch 1 oder 2, ferner umfassend:

- eine dritte Elektrode (28), die sich innerhalb des dielektrischen Elementes zwischen der ersten Elektrode (14, 24) und der zweiten Elektrode (15, 25) ausbreitet und mit dem einen der beiden Enden (12a, 12b) der Schleifenantenne mittels eines Leiters verbunden ist, und
- eine vierte Elektrode (29), die sich innerhalb des dielektrischen Elementes (11) zwischen der ersten Elektrode (14, 24) und der dritten Elektrode (28) ausbreitet und mit dem anderen der beiden Enden (12a, 12b) der Schleifenantenne mittels eines Leiters verbunden ist.

**Revendications**

**1.** Étiquette RFID (10), comprenant :

- un élément diélectrique tabulaire (11);
- un motif d'antenne (12) qui s'étend sur une surface supérieure et une surface inférieure de l'élément diélectrique, et forme une antenne cadre ayant deux extrémités (12a, 12b) existant sur une surface de la surface supérieure et de la surface inférieure ;
- une puce de circuit (13) qui est connectée électriquement au motif d'antenne (12) et met en oeuvre une communication par l'intermédiaire de l'antenne cadre ;
**caractérisée en ce qu'**elle comprend en outre :
- une première électrode (14, 24) qui est connectée directement ou par l'intermédiaire d'un conducteur à l'une (12a, 12b) des deux extrémités de l'antenne cadre et s'étend sur ladite une surface ; et
- une deuxième électrode (15, 25) qui est connectée par l'intermédiaire d'un conducteur à l'autre extrémité (12a, 12b) relativement à l'une (12a) des deux extrémités de l'antenne cadre, et s'étend sur l'autre surface relativement à ladite une surface de la surface supérieure et de la surface inférieure, le long de la première électrode (14, 24).

**2.** Étiquette RFID (10) selon la revendication 1, dans laquelle la deuxième électrode (15, 25) est connectée à l'antenne cadre par l'intermédiaire d'un conducteur pénétrant (16), lequel pénètre dans l'élément diélectrique (11).

**3.** Étiquette RFID (10) selon la revendication 1 ou 2, comprenant en outre :

- une troisième électrode (28) qui s'étend, à l'intérieur de l'élément diélectrique, entre la première électrode (14, 24) et la deuxième électrode (15, 25), et est connectée à l'une des deux extrémités (12a, 12b) de l'antenne cadre par l'intermédiaire d'un conducteur ; et

- une quatrième électrode (29) qui s'étend à l'intérieur de l'élément diélectrique (11), entre la première électrode (14, 24) et la troisième électrode (28), et est connectée à l'autre des deux extrémités (12a, 12b) de l'antenne cadre par l'intermédiaire d'un conducteur.

# FIG. 1

# FIG. 2

# FIG. 3

# FIG. 4

# FIG. 5

# FIG. 6

# FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002246829 A
- EP 1626364 A2

- JP 2003249814 B